# EUROPEAN PATENT SPECIFICATION

(11) **EP 2 480 900 B1**
(45) Date of publication and mention of the grant of the patent: **08.10.2014**
(21) Application number: 11788913.9
(22) Date of filing: 24.10.2011
(51) Int. Cl.: G01R 13/40, G01D 4/00

(54) **Projected display of energy consumption**
Energieverbrauchsanzeiger mit Projektion
Dispositif lumineux à projection de la consommation d'energie

(30) Priority: 22.10.2010 GB 201017861
(43) Date of publication of application: 01.08.2012
(73) Proprietor: EnergyTap LLP, Stratford-upon-Avon Warwickshire CV37 6JG (GB)
(72) Inventor: COOPER, Stuart David, Cambridgeshire CB23 6FE (GB)
(74) Representative: Mansfield, Peter Turquand
(86) International application number: PCT/GB2011/052059
(87) International publication number: WO 2012/052784

(56) References cited:
- US-A1- 2005 190 074
- US-A1- 2008 052 017
- US-A1- 2010 060 479
- US-B1- 6 956 500

## Description

This invention relates to a device for providing a projected display of energy use, and is particularly, although not exclusively, useful for providing a projected display of domestic energy use.

In-home energy displays have continued to develop in functionality, appearance, and user experience. However, they are becoming increasingly reliant on small touchscreen displays, and as such, limit ease of use and accessibility for many important user groups. Current examples of such displays rely on table top locations which occupy valuable domestic workspace. Poor usability and work surface space requirements can contribute to shortened useful lifespan and premature disposal by the end user because users quickly lose interest, and reduce interaction or discard the devices completely".

US2008/052017 (Wendell) provides an example of a prior fixed energy monitor for a building with displays in each room of the building.

The present invention seeks to prioritise usability and inclusive design principles and uses simple mechanical controls in a device which has an appearance simulating a single basin water tap, and which incorporates a large downward projected display to communicate to a user selective energy use information.

The projected display emitted from the spout of the tap-shaped form of the device is suggestive of running water to communicate rate of domestic energy use. This visual effect of lost or wasted energy increases user interest and involvement which are incentives in reducing home energy use.

The present invention provide a device for projecting by way of a projected display, information relating to any one or more of historic, current of predicted energy use by an energy consumer, the information to be displayed including any combination of digital, analogue and pictorial representations in the projected display, wherein the device comprises a main body adapted to be plugged directly into a power socket in order wirelessly to receive energy consumption data from a smart meter system, and wherein instructing means are provided by which the device can be instructed to change the format of the projected display. In a preferred construction, the device further is adapted to display transmitted information onto a surface adjacent the power socket to which it is connected. It is further preferred that the device incorporates a power supply to enable temporary disconnection from a power socket to allow the display of information to be projected onto a chosen display surface remote from the power socket and/or allow the device to be disconnected from one power socket and reconnected to another.

According to a still further feature of the invention the device may be adapted to project energy tariff/pricing information in real-time using a dedicated visual display.

According to another feature of the invention the instructing means of the device may comprise a plurality of control elements to adjust display parameters such as the 'utility' being consumed including electricity and/or gas consumption, the 'measure' such as local currency cost, consumed energy (kilowatt hours) and/or other characteristic such as CO₂ content, and the 'period' of consumption including intervals of an hour or less, day, week, month, quarter and/or year.

According to yet another feature of the invention, the device may be in the form of a single basin water tap incorporating projecting means, and wherein the spout of the tap emits, in use, the projected display. Preferably, the instructing means of the device comprises a plurality of rotary mechanical controls provided by the body and/or the spout of the tap. It is also a preferred feature of the invention that the displayed information comprises an animated water-ripple effect upon projection surface to communicate the rate of energy use.

According to a still further feature of the invention, the device may incorporate a visual and/or audible alarm to warn of low ambient temperature.

According to yet another feature of the invention, the device may incorporate a motion detector adapted to actuate means for changing the status of the device from a standby display to a more detailed display mode.

An embodiment of the invention will not be described, by way of example, with reference to the accompanying drawings, in which:
Figure 1 is a perspective view of a device according to the invention,
Figure 2 is a plan view of the device shown in Figure 1,
Figure 3 is a side elevation of the device shown in Figure 1,
Figure 4 is a perspective view of the device shown in one mode of operation, and
Figure 5 is another perspective view of the device shown in another mode of operation.

The illustrated embodiment works in collaboration with existing smart-meter technologies to receive personal usage data and comprises a single electronic device whose main body plugs directly into a standard wall socket. The device projects a large user-interface onto the horizontal surface immediately below the socket site, typically a work surface or covered floor.

Preferably, the device incorporates an onboard power-supply to enable temporary removal from the wall for hand-held magnified projection against a chosen alternative surface. The independent power supply also allows movement of the device around a domestic setting without loss of data so that it can be unplugged from one socket and re-plugged into another socket.

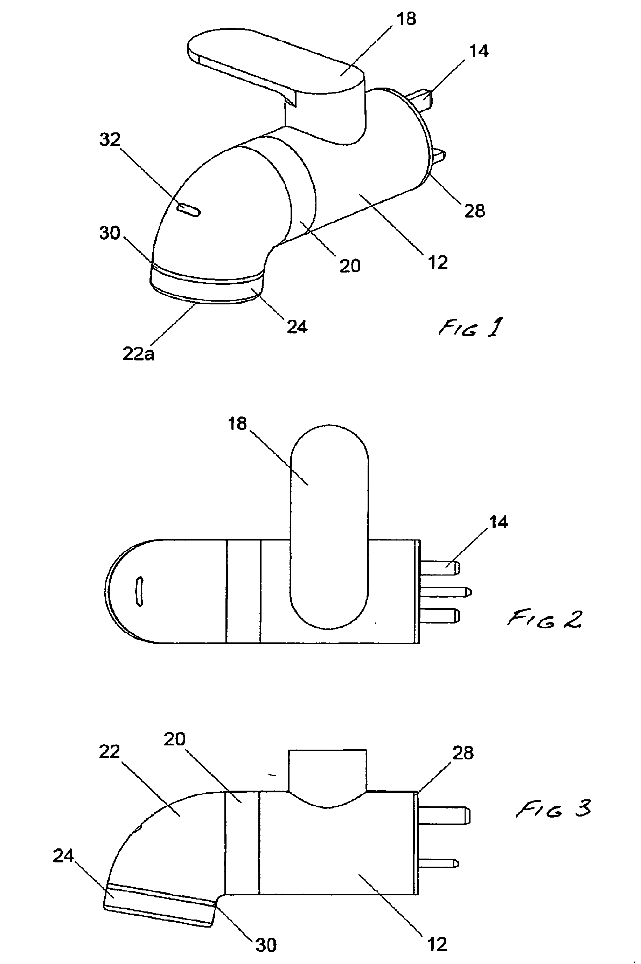

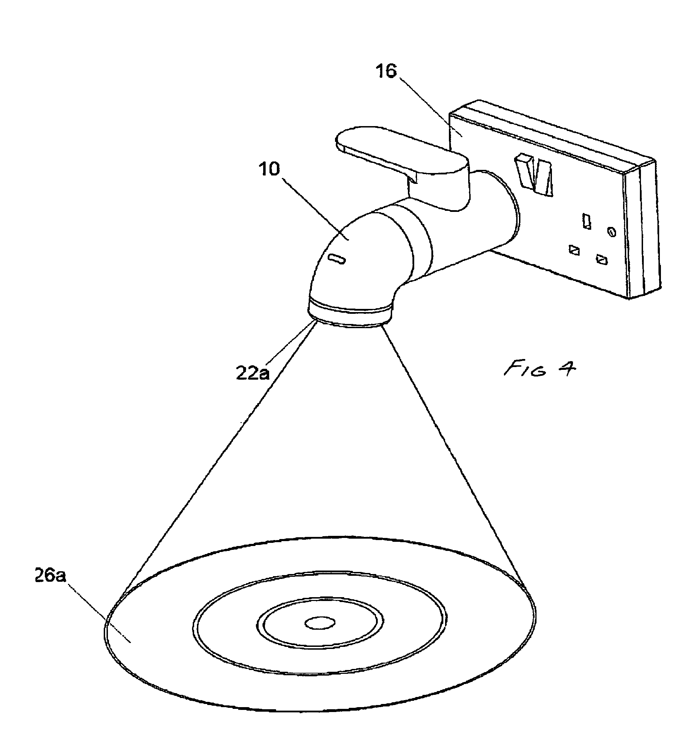

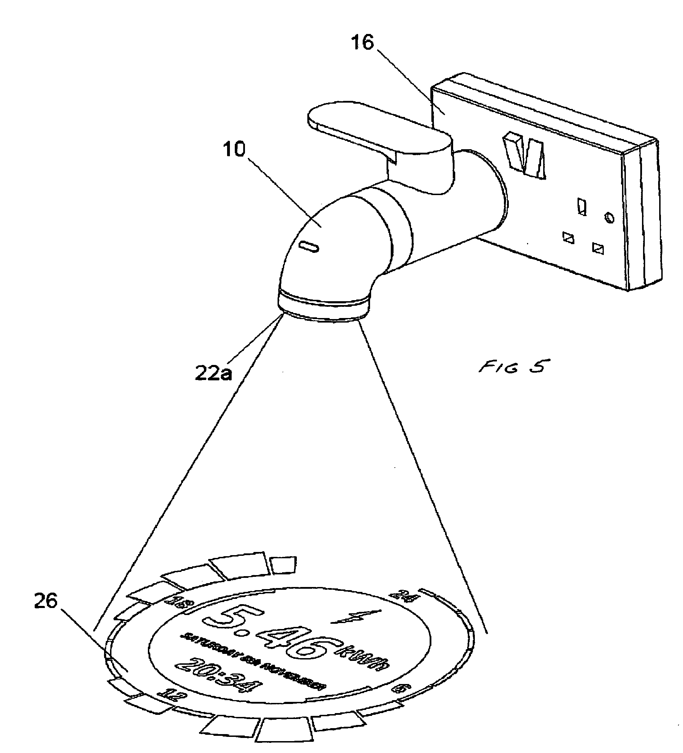

Referring to the drawings, a device 10 for transmitting information by way of a projected display is in a form which resembles a single basin water tap as shown in Figures 1 to 5. The body 12 of the device includes electrical pins 14 which in this case, comprise a standard UK three pin array, for connecting the device to an electrical wall socket 16 (Figures 4 and 5). In order to use the device a user plugs the device into the wall socket 16, switching on the supply. The user can then customise the display parameters by actuating one or more of a number of control elements.

In this embodiment of the invention, the user control elements are all mechanical and are all based on physical manipulation of rotary dial switches for optimal clarity and ease of use.

First, a three-position handle 18 which has a 'Utility' selection comprising electricity, gas, or both can be rotated to select one or more chosen utilities. A further dial 20 provided on the body of the device adjacent the spout 22 can be indexed to select a reporting measure such as local currency, consumed energy (kWh) and/or some other characteristic such as CO₂ emission. A further dial 24 provided at the mouth of the spout can be rotated to select the time period for the data such as increments up to and including an hour, day, week, month, quarter and/or year.

All changes update immediately on a projected display 26 which is emitted by projecting means (not shown), provided within the device, from the mouth 22a of the spout.

This information increases energy-use understanding by the user. Preferably, the device is capable of projecting basic status alerts and custom messages to the user in the form of icons and scrolling text.

In this particular embodiment, the colour of the projected display is a single colour of green, amber, or red depending on the ongoing usage intensity, where a red display represents high energy usage and a green display represents a low energy usage.

A glowing light ring 28 incorporated into the body 12 adjacent the pin array 14 uses a combination of flashing and solid light states to communicate changes of energy tariff. In this example, an amber light output represents a medium priced tariff, and a red light output represents a high priced tariff. A further glowing light ring 30 provided adjacent the mouth of the sprout communicates ongoing usage intensity using green, amber, or red pulsing light output.

The tariff light ring indicator 28 and usage indicator light ring 30 remain active at all times. These are the desired visual outputs whilst the device is in predetermined 'sleep' mode. In a standby mode, the glowing ring outputs 28 and 30 are accompanied by an animated water-ripple effect e.g. a 'dripping-tap' visual effect 26a as shown in Figure 4 so as to communicate the rate of energy use. The device also incorporates a motion-sensor 32 located on the bridge of the spout by which a passing end-user triggers the display into a more detailed mode which may include full digital and analogue information relating to current, historic and/or predicted energy use.

## Claims

1. A device (10) for projecting by way of a projected display (26), information relating to any one or more of historic, current or predicted energy use by an energy consumer, the information to be displayed including any combination of digital, analogue and pictorial representation in the projected display, **characterised in that** the device comprises a main body (12) adapted to be plugged directly into a power socket (16) in order wirelessly to receive energy consumption data from a smart-meter system and wherein instructing means (18, 20, 24) are provided by which the device can be instructed to change the format of the projected display.

2. A device (10) as claimed in claim 1, wherein the device is adapted to display, the information onto a surface adjacent the power socket to which it is connected.

3. A device (10) as claimed in claim 2, wherein the device incorporates a power supply to enable temporary disconnection from a power socket to allow the display of information to be projected onto a chosen display surface remote from the power socket and/or allow the device to be disconnected from one power socket and reconnected to another.

4. A device (10) as claimed in any of the preceding claims adapted to project energy tariff/pricing information in real-time by means of a dedicated visual display.

5. A device (10) according to any of the preceding claims, wherein the instructing means (18, 20, 24) of the device comprises a plurality of control elements to adjust display parameters such as the utility being consumed including electricity and/or gas consumption, the 'measure' such as local currency cost, energy and/or other characteristic such as CO₂ content, and the 'period' of consumption including intervals of an hour or less, day, week, month, quarter and/or year.

6. A device (10) as claimed in any of the preceding claims, wherein the device is in the form of a single basin water tap incorporating projecting means, and wherein the spout (22) of the tap emits, in use, the projected display.

7. A device (10) as claimed in claim 6 wherein the instructing means (18, 20, 24) of the device comprises a plurality of rotary mechanical controls (20, 24) provided by the body and/or the spout of the tap.

8. A device (10) as claimed in any proceeding claim, wherein the displayed information comprises an animated water-ripple effect (26n) upon a projection surface to communicate the rate of energy use.

9. A device (10) as claimed in any of the preceding claims wherein the device incorporates a visual and/or audible alarm to warn of low ambient temperature.

10. A device (10) as claimed in any of the preceding claims, wherein the device incorporates a motion detector (32) adapted to actuate means for changing the status of the device from a standby display to a more detailed display mode.

## Patentansprüche

1. Eine Einrichtung (10) zur Projektion von Informationen in Bezug auf eine oder mehrere beliebige historische, aktuelle oder voraussichtliche Energieverwendungen durch einen Energieverbraucher über eine projizierte Anzeige (26), wobei die anzuzeigenden Informationen beliebige Kombinationen von digitalen, analogen und bildlichen Darstellungen in der projizierten Anzeige aufweisen, **dadurch gekennzeichnet, dass** die Einrichtung einen Hauptkörper (12) aufweist, der eingerichtet ist, um direkt in eine Strombuchse (16) gesteckt zu werden, um drahtlos Energieverbrauchsdaten von einem Smart-Meter-System zu empfangen, und wobei Anweisungsmittel (18, 20, 24) bereitgestellt sind, durch welche die Einrichtung angewiesen werden kann, das Format der projizierten Anzeige zu ändern.

2. Einrichtung (10) nach Anspruch 1, wobei die Einrichtung eingerichtet ist, um die Informationen auf einer Fläche neben der Strombuchse, mit der sie verbunden ist, anzuzeigen.

3. Einrichtung (10) nach Anspruch 2, wobei die Einrichtung eine Stromversorgung integriert, um die vorübergehende Trennung von einer Strombuchse zu ermöglichen und die Projektion der Informationsanzeige auf eine gewählte, von der Strombuchse entfernte Anzeigefläche zu ermöglichen und/oder um der Einrichtung die Trennung von einer Strombuchse und den Wiederanschluss an eine andere Strombuchse zu ermöglichen.

4. Einrichtung (10) nach einem der vorstehenden Ansprüche, die eingerichtet ist, um Energietarife/Preisinformationen in Echtzeit mittels einer dedizierten Sichtanzeige zu projizieren.

5. Einrichtung (10) nach einem der vorstehenden Ansprüche, wobei die Anweisungsmittel (18, 20, 24) der Einrichtung eine Vielzahl von Steuerelementen aufweisen, um Anzeigeparameter einzustellen, wie z. B. die gerade verbrauchte Versorgungsleistung einschließlich Strom- und/oder Gasverbrauch, das "Maß", wie z. B. Kosten in örtlicher Währung, Energie- und/oder andere Merkmale wie z. B. CO₂-Gehalt, und den "Verbrauchszeitraum" mit Intervallen von einer Stunde oder weniger, Tag, Woche, Monat, Vierteljahr und/oder Jahr.

6. Einrichtung (10) nach einem der vorstehenden Ansprüche, wobei die Einrichtung in der Form einer einzelnen Wasserbeckenarmatur vorliegt, die Projektionsmittel integriert, und wobei im Betrieb durch den aus dem Wasserhahn austretenden Wasserstrahl (22) die projizierte Anzeige ausgegeben wird.

7. Einrichtung (10) nach Anspruch 6, wobei die Anweisungsmittel (18, 20, 24) der Einrichtung eine Vielzahl von mechanischen Drehregelelementen (20, 24) aufweisen, die vom Körper und/oder vom Wasserstrahl des Wasserhahns bereitgestellt werden.

8. Einrichtung (10) nach einem der vorstehenden Ansprüche, wobei die angezeigten Informationen einen animierten Effekt plätschernden Wassers (26a) auf einer Projektionsfläche aufweist, um den Durchfluss des Energieverbrauchs zu kommunizieren.

9. Einrichtung (10) nach einem der vorstehenden Ansprüche, wobei die Einrichtung eine visuelle und/oder akustische Warnmeldung in Bezug auf niedrige Umgebungstemperatur integriert.

10. Einrichtung (10) nach einem der vorstehenden Ansprüche, wobei die Einrichtung einen Bewegungsdetektor (32) integriert, der eingerichtet ist, um Mittel zur Änderung des Status der Einrichtung von einer Standby-Anzeige zu einem detaillierteren Anzeigemodus zu betätigen.

## Revendications

1. Dispositif (10) pour projeter, au moyen d'un affichage projeté (26), des informations concernant une quelconque ou plusieurs d'une utilisation d'énergie passée, actuelle ou prédite par un consommateur d'énergie, les informations devant être affichées comprenant toute combinaison de représentations numérique, analogique et graphique dans l'affichage projeté, **caractérisé par le fait que** le dispositif comprend un corps principal (12) apte à être branché directement dans une prise électrique (16) afin de recevoir sans fil des données de consommation d'énergie provenant d'un système de compteur intelligent, et étant prévus des moyens d'instruction (18, 20, 24) par lesquels le dispositif peut avoir pour instruction de changer le format de l'affichage projeté.

2. Dispositif (10) selon la revendication 1, dans lequel le dispositif est apte à afficher les informations sur une surface adjacente à la prise électrique à laquelle il est connecté.

3. Dispositif (10) selon la revendication 2, dans lequel le dispositif incorpore un bloc d'alimentation pour permettre une déconnexion temporaire d'une prise électrique pour permettre à l'affichage d'informations d'être projeté sur une surface d'affichage choisie à distance de la prise électrique et/ou permettre au dispositif d'être déconnecté d'une prise électrique et reconnecté à une autre.

4. Dispositif (10) selon l'une quelconque des revendications précédentes, apte à projeter des informations de tarif/prix d'énergie en temps réel au moyen d'un affichage visuel dédié.

5. Dispositif (10) selon l'une quelconque des revendications précédentes, dans lequel les moyens d'instruction (18, 20, 24) du dispositif comprennent une pluralité d'éléments de commande pour ajuster des paramètres d'affichage tels que le service public consommé, comprenant la consommation d'électricité et/ou de gaz, la « mesure » telle que le coût en monnaie locale, l'énergie et/ou autre caractéristique telle que la teneur en CO₂, et la « période » de consommation, comprenant des intervalles d'une heure ou moins, d'un jour, d'une semaine, d'un mois, d'un trimestre et/ou d'une année.

6. Dispositif (10) selon l'une quelconque des revendications précédentes, dans lequel le dispositif se présente sous la forme d'un unique robinet d'eau d'évier incorporant des moyens de projection, et le bec (22) du robinet émettant, en utilisation, l'affichage projeté.

7. Dispositif (10) selon la revendication 6, dans lequel les moyens d'instruction (18, 20, 24) du dispositif comprennent une pluralité de commandes mécaniques rotatives (20, 24) fournies par le corps et/ou le bec du robinet.

8. Dispositif (10) selon l'une quelconque des revendications précédentes, dans lequel les informations affichées comprennent un effet d'ondulation d'eau animé (26a) sur une surface de projection pour communiquer le taux d'utilisation d'énergie.

9. Dispositif (10) selon l'une quelconque des revendications précédentes, dans lequel le dispositif incorpore une alarme visuelle et/ou sonore pour avertir d'une température ambiante basse.

10. Dispositif (10) selon l'une quelconque des revendications précédentes, dans lequel le dispositif incorpore un détecteur de mouvement (32) apte à actionner des moyens pour changer le statut du dispositif d'un mode d'affichage en veille à un mode d'affichage plus détaillé.
